**Europäisches Patentamt**

**European Patent Office**

**Office européen des brevets**

(19)

(11) Veröffentlichungsnummer : **0 348 604 B1**

(12) **EUROPÄISCHE PATENTSCHRIFT**

(45) Veröffentlichungstag der Patentschrift :
**29.04.92 Patentblatt 92/18**

(51) Int. Cl.$^5$ : **B23P 21/00**, B65G 49/00

(21) Anmeldenummer : **89105693.9**

(22) Anmeldetag : **31.03.89**

(54) Vorrichtung zur Montage von Werkstücken.

(30) Priorität : **01.07.88 DE 3822205**

(43) Veröffentlichungstag der Anmeldung :
**03.01.90 Patentblatt 90/01**

(45) Bekanntmachung des Hinweises auf die
Patenterteilung :
**29.04.92 Patentblatt 92/18**

(84) Benannte Vertragsstaaten :
**AT BE CH DE ES FR GB GR IT LI LU NL SE**

(56) Entgegenhaltungen :
**CH-A- 663 742**
**DD-A- 223 387**
**DE-A- 2 039 192**
**DE-A- 2 405 024**
**DE-A- 3 035 191**
**US-A- 4 627 158**

(73) Patentinhaber : **HUBERT SCHULTE
SONDERMASCHINENBAU GMBH
Märkische Strasse 14
W-5870 Hemer (DE)**

(72) Erfinder : **Schulte, Hubert
Berkenhofskamp 17
W-5750 Menden 2 (DE)**

(74) Vertreter : **Patentanwälte Meinke und
Dabringhaus Dipl.-Ing. J. Meinke Dipl.-Ing. W.
Dabringhaus
Westenhellweg 67
W-4600 Dortmund 1 (DE)**

**Beschreibung**

Die Erfindung betrifft eine Vorrichtung zur Montage von Werkstücken mit an einer Transporteinrichtung angeordneten Werkstückträgern und mit entlang der Transporteinrichtung angeordneten Montagestationen mit Montageeinrichtungen, wobei jede Montagestation mit einem Antrieb für die jeweilige Montageeinrichtung ausgerüstet ist und eine Einrichtung zur zeitweisen Synchronisation einer Mitnahmebewegung der Montageeinrichtung jeder Montagestation mit dem jeweiligen Werkstückträger aufweist.

Eine solche Vorrichtung ist in allgemeiner Form in der DE-A 20 39 192 (nächstliegender Stand der Technik) beschrieben. Derartige bekannte Vorrichtungen bedürfen aber eines erheblichen technischen Aufwandes, um den Synchronlauf der Fördereinrichtung mit der Bearbeitungsstation zu gewährleisten.

Aus der US-A 4 627 158 ist eine Vorrichtung zur Montage von Werkstücken mit an einer Transporteinrichtung angeordneten Werkstückträgern und mit entlang der Transporteinrichtung angeordneten Montagestationen mit Montageeinrichtungen bekannt. Bei dieser Vorrichtung wird ein Werkstück mit einer Transporteinrichtung in eine Montagestation gefördert und dort angehalten. Es erfolgt dann die Montage bei stehendem Transportband, d.h. nachdem die Montageeinrichtung in die richtige Montageposition gegenüber dem Werkstück bewegt worden ist, findet die Montage bei stillstehender Montageeinrichtung und stillstehendem Werkstückträger statt. Diese Stillstandzeiten führen dazu, daß die Stückleistung derartiger Montagevorrichtungen begrenzt und deshalb nicht zufriedenstellend ist.

Aufgabe der Erfindung ist demgegenüber die Schaffung einer Lösung, mit welcher die Stückleistung derartiger Vorrichtungen erhöht werden kann, wobei gleichzeitig Stillstandzeiten möglichst vermieden werden sollen, ohne daß dazu ein großer technischer Aufwand erforderlich ist.

Diese Aufgabe wird mit einer Vorrichtung der eingangs bezeichneten Art erfindungsgemäß dadurch gelöst, daß jede Montagestation mit einer zugeordneten elektronischen meß- und Regeleinrichtung zur Positionsbestimmung des jeweiligen Werkstückträgers und zur Synchronisation der Werkstückträger- und Montageeinrichtungsvorschubgeschwindigkeit ausgerüstet ist, wobei die Meß- und Regeleinrichtung Mittel zur kontinuierlichen Positionsbestimmung des Werkstückträgers und Mittel zur entsprechenden Anpassung der Vorschubgeschwindigkeit des Antriebsmotors aufweist.

Bei der erfindungsgemäßen Vorrichtung erfolgt die Montage der Werkstücke in den einzelnen Montagestationen bei laufender Transporteinrichtung, indem die Montageeinrichtung jeder Montagestation sich gleichmäßig mit dem jeweiligen, von der Transporteinrichtung angetriebenen Werkstückträger mitbewegt, ohne daß hierzu ein großer technischer Aufwand erforderlich ist, es sind nur entsprechende elektronische Mittel zur kontinuierlichen Positionsbestimmung des Werkstückträgers und zur entsprechenden Anpasssung der Vorschubgeschwindigkeit des Antriebsmotors erforderlich. Auf diese Weise kommt es nicht zum Stillstand der Transporteinrichtung und nur einem sehr kurzfristigen Stillstand der jeweiligen Montagestation beim wechsel von einem Werkstück zum nächsten, so daß die Stückleistung der Vorrichtung wesentlich vergrößert werden kann.

In vorteilhafter Ausgestaltung sieht die Erfindung vor, daß die Montageeinrichtung auf einem in Richtung des Transporteinrichtung in einer Schlittenführung der Montagestation verfahren Schlitten angeordnet ist. Dabei ist die Montagestation als solche stationär angeordnet, während der Schlitten mit der Montageeinrichtung zur Mitbewegung mit dem jeweiligen Werkstückträger verfahrbar ist.

In besonders vorteilhafter Ausgestaltung der Erfindung ist vorgesehen, daß die Mittel zur kontinuierlichen Positionsbestimmung des Werkstückträgers von wenigstens zwei am Schlitten angeordneten, auf den jeweiligen Werkstückträger gerichteten, ein Magnetfeld erzeugenden analogen Pulsoren und die Mittel zur Anpassung der Vorschubgeschwindigkeit des Antriebsmotors von einem analogen Regler und einem den Antriebsmotor steuernden Motorregler gebildet sind und daß jeder Werkstückträger an der der jeweiligen Montagestation zugewandten Seite mit wenigstens einem das von den analogen Pulsoren erzeugte Magnetfeld verändernden Markierungselement ausgerüstet ist. Das Markierungselement ist dabei beispielsweise vorteilhaft an der vorderen Kante des jeweiligen Werkstücktragers angeordnet, so daß beim Vorbeifahren des Werkstückträgers diese Kante durch die Veränderung des Magnetfeldes vom analogen Pulsor entdeckt, entsprechend in den Reglern umgesetzt und über die Regler vom Motor eine dem Werkstückträger entsprechend synchrone Vorschubgeschwindigkeit für den Schlitten erzeugt wird.

Wenn eine besonders exakte Synchronisierung zwischen Schlitten und Werkstückträger erforderlich ist, ist vorgesehen, daß das Markierungselement als Meßleiste mit wenigstens randseitigen, das von den analogen Pulsoren erzeugte Magnetfeld verändernden Markierungen ausgebildet ist. Gelangt der Werdstückträger in den Bereich der Pulsoren, so werden in beiden Pulsoren unabhängig voneinander Magnetfeldänderungen aufgrund der Meßleiste festgestellts, d.h. mögliche Abweichungen werden gegeneinander gedämtft bzw. weitgehend ausgeglichen, so daß eine besonders exakte Synchronisierung möglich ist.

Es kann auch vorgesehen sein, daß dam Werkstückträger mehrere Markierungselemente angeordnet sind.

Durch diese Ausbildung kann gleichzeitig neben der Synchronisierung auch eine Positionierung der Montageeinrichtung am jeweiligne Werkstück in Transportrichtung vorgenommen werden.

Es ist zweckmäßig, wenn zur beschleunigung und/oder Rückführung des Schlittens ein auf den Motorregler einwirkender digitaler Steuerkreis mit inkrementalem Drehgeber und Process-controler vorgesehen ist. Dieser digitale Steuerkreis ist dem analogen Steuerkreis während der Beschleunigung und/oder Rückführung überlagert, es kann aber auch nur eine analogue Steuerung vorgesehen sein.

Es ist zweckmäßig, wenn die Montageeinrichtung gegenüber dem Schlitten um die drei Raumachsen beweglich angeordnet ist. Durch diese Ausbildung sind die Montageeinrichtungen zur Montage und bearbeitung unterschiedlicher Werkstücke geeignet.

Vorteilhaft ist der kontinuierlichen Transporteinrichtung eine Werkstückzuführung vorgeschaltet und an jeder Montagestation eine Montagemittelzuführung angeordnet, wodurch eine vollautomatische Arbeitsweise der erfindungsgemäßen Vorrichtung gewährleistet ist.

Die Erfindung sieht auch vor, daß die Werkstückträger mit einer Codierung und die Montagestation mit einem entsprechenden Ablesegerät versehen sind. Durch diese Codierung ist die Montage mehrerer unterschiedlicher Produkte innerhalb des Gesamtsystems möglich.

Die Erfindung ist nachstehend anhand der Zeichnung beispielsweise näher erläutert. Diese zeigt in

Fig. 1 in schematischer Darstellung in einer Draufsicht ein Ausführungsbeispiel der Erfindung,

Fig. 2 ebenfalls in einer Draufsicht ein zweites Ausführungsbeispiel und

Fig. 3 eine elektronische Schaltung für eine Synchronisationseinrichtung nach Fig. 2.

Eine Vorrichtung zur Montage von Werkstücken weist eine Transporteinrichtung 1 auf, die in der Zeichnung vereinfacht durch einen Kettenantrieb 2 und ein Führungsgestell 3 angedeutet ist. Auf diesem Gestell 3 sind Werkstückträger 4 mittels des Kettenantriebs 2 in Längsrichtung verschiebbar angeordnet.

Entlang der Transporteinrichtung 1 sind hintereinander mehrere Montagestationen 5 vorgesehen, von denen in der Zeichnung der Übersichtlichkeit halber nur eine Station dargestellt ist. Jede Montagestation 5 weist eine Montageeinrichtung 6 auf, welche beispielsweise auf einem Schlitten 7 angeordnet ist, der in einer stationären Schlittenführung 8 parallel zur Längsrichtung der Transporteinrichtung 1 verfahrbar ist, d.h. die Montageeinrichtung 6 ist über den Schlitten 7 in Längsrichtung verfahrbar.

Die Montageeinrichtung 6 selbst ist gegenüber dem Schlitten 7 über NC-Eingabeachsen in allen drei Raumrichtungen beweglich angeordnet, was durch Pfeile 9 und 10 in der Zeichnung angedeutet ist. Dabei ist die Positionierung der Montageeinrichtung 6 rechnergesteuert vornehmbar, wobei allerdings in der Zeichnung kein Steuerungsrechner dargestellt ist.

Jeder Schlitten 7 der Montageeirichtungen 6 weist einen Mitnehmer 11 auf, welcher zur Ankoppelung der Montageeinrichtung 6 an den jeweiligen Werkstückträger 4 dient. Diesem Mitnehmer 11 ist weiterhin ein Lichttaster 12 zugeordnet.

Am Schlitten 7 ist zusätzlich eine Rückholeinrichtung 13 angeordnet, welche gleichzeitig mit einem ortsfesten Teil 14 der Montagestation 5 verbunden ist. Jeder Montagestation 5 ist eine Montagemittelzufuhr 15 zugeordnet, welche beispielsweise aus einem Schwingförderer 16 und einem Linearförderer 17 besteht.

Der Montageablauf der Vorrichtung ist der folgende:

Einzelne, zu montierende Werkstücke sind nacheinander auf den einzelnen Werkstückträgern 4 angeordnet. Diese Werkstückträger 4 werden durch die Transporteinrichtung 1 kontinuierlich ohne Stillstand an den einzelnen Montagestationen vorbeigeführt. Nähert sich ein Werkstückträger 4 einer Montagestation 5 mit einem zu bestückenden Werkstück, so positioniert sich der jeweilige Schlitten 7 der betreffenden Montageeinrichtung 6 an den jeweiligen Werkstückträger 4, wodurch der Schlitten 7 mit der Montageeinrichtung 6 synchron mit dem Werkstückträger 4 mitbewegt wird.

Während dieser Mitnahmebewegung wird das betreffende Werkstück auf dem Werkstückträger 4 mit den von der Montagemittelzufuhr 15 zugeführten Teilen bestückt und entsprechend komplettiert.

Nach Beendigung des Montagevorganges wird die Montageeinrichtung 6 bzw. der Schlitten 7 vom Werkstückträger 4 wieder abgekoppelt und von der Rückholeinrichtung 13, die in der Zeichnung als Rückholfeder dargestellt ist, aber auch als Pneumatikzylinder oder dgl. ausgeführt sein kann, in die Ausgangsposition zurückbewegt. Zwischenzeitlich ist ein nachfolgender Werkstückträger 4 mit einem neu zu bestückenden Werkstück von der Transporteinrichtung 1 entsprechend nachgeliefert worden und wird nach demselben Montageablauf in der Montagestation 5 montiert. Das vorher bestückte Werkstück wird dann entsprechend gleichzeitig einer nachgeschalteten Montagestation zugeführt.

Gegenüber bekannten Montagevorrichtungen der betreffenden Art zeichnet sich die erfindungsgemäße Vorrichtung durch eine wesentlich größere Stückleistung aus, da praktisch keine Stillstandzeiten auftreten. Die Transporteinrichtung 1 läuft kontinuierlich, da während des Montageablaufs in den jeweiligen Montagestationen 5 ein Anhalten nicht notwendig ist. Auch ein Stillstand der Montagestationen 5 während des Weitertransports der Werkstückträger 4 findet nicht statt, lediglich während der Rückbewegung der Montageeinrichtung in die Ausgangsposition tritt eine vernachlässigbare Stillstandzeit auf.

Natürlich sind die einzelnen Montagestationen 5 an einen zentralen Steuerungsrechner bzw. zusätzlich an einen jeweils eigenen Rechner angeschlossen, was in der Zeichnung nicht näher dargestellt ist. Über diesen Rechner können sämtliche Montageabläufe vorbestimmt und geregelt werden, so z.B. die Transportgeschwindigkeit der Transporteinrichtung 1 und die einzelnen Montageabläufe in den Montagestationen 5. Weiterhin können die einzelnen Werkstückträger 4 mit Codierungen versehen sein, welche dann von in der Zeichnung nicht dargestellten Ablesegeräten an der betreffenden Montagestation abgelesen werden können, wodurch die Montage unterschiedlicher Produkte innerhalb des Gesamtsystems möglich ist.

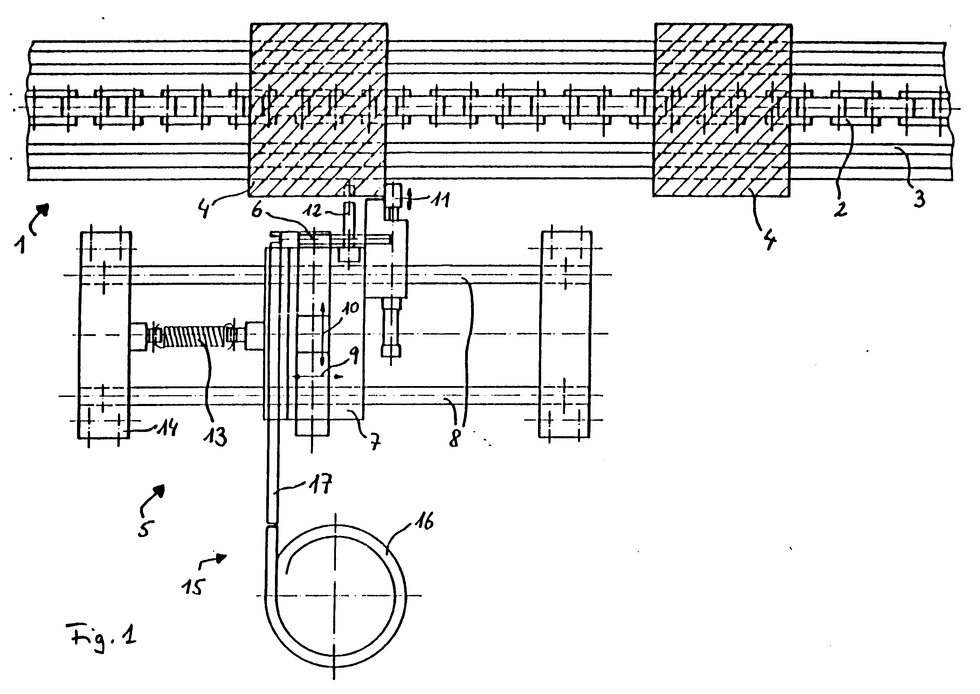

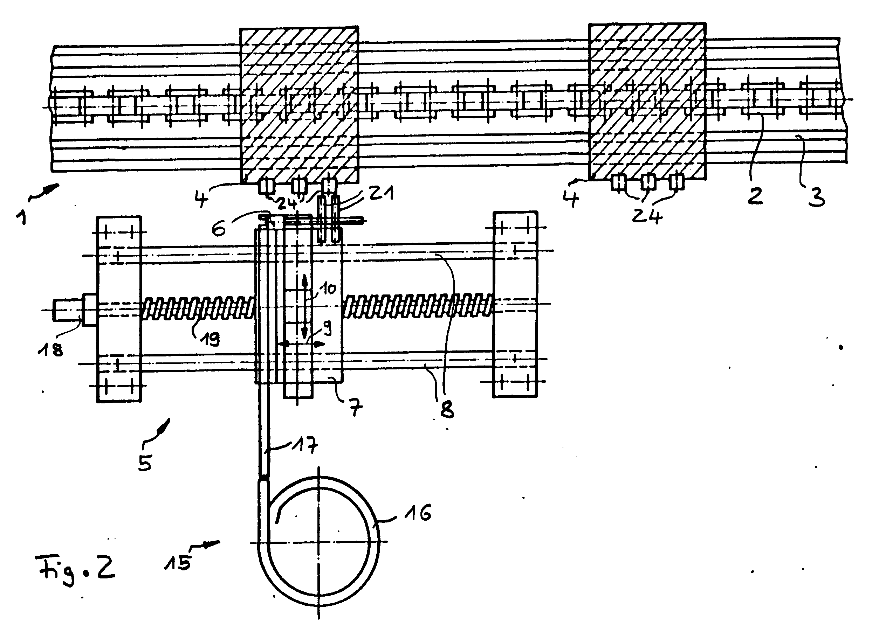

In Fig. 2 ist ein anderes Ausführungsbeispiel der Erfindung dargestellt, das sich im wesentlichen vom in Fig. 1 gezeigten Ausführungsbeispiel durch eine elektronische anstelle einer mechanischen Synchronisationseinrichtung unterscheidet. Insoweit gleiche Funktionsteile wie in Fig. 1 bezeichnet sind, sind dieselben Bezugszeichen wie in Fig. 1 verwandt.

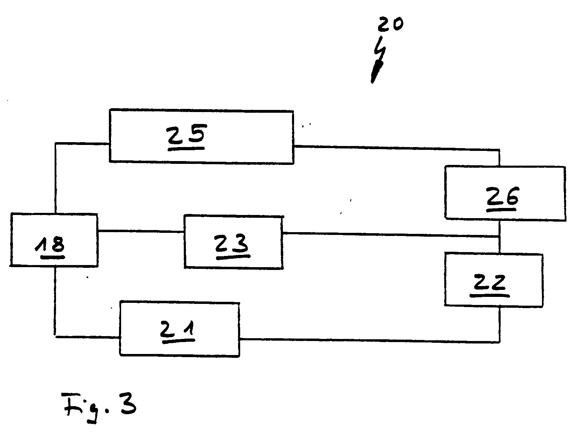

Die Montagestation 5 weist einen eigenen elektrischen Antriebsmotor 18 mit Antriebsspindel 19 für den Schlitten 7 auf. Der Antriebsmotor 18 wird von einer elektronischen Meß- und Regeleinrichtung gesteuert, die allgemein mit 20 bezeichnet und deren Schaltschema in Fig. 3 dargestellt ist.

Die elektronische Meß- und Regeleinrichtung 20 weist zwei am Schlitten 7 angeordnete, auf den jeweiligen Werkstückträger 4 gerichtete, ein Magnetfeld erzeugende analoge Pulsoren 21, einen PID-Regler 22 und einen den Antriebsmotor 18 steuernden Motorregler 23 auf.

Jeder Werkstückträger 4 ist an der der Montagestation 5 zugewandten Seite mit als Meßleisten ausgebildeten Markierungselementen 24 mit wenigstens randseitigen metallischen Markierungen ausgerüstet, die jeweils das von den analogen Pulsoren 21 erzeugte Magnetfeld verändern, wenn sie in den Bereich der Pulsoren 21 gelangen. Dabei sind die Markierungselemente 24 bevorzugt an der vorderen und hinteren Kante des jeweiligen Werkstückträgers 4 angeordnet.

Neben dem analogen Steuerkreis mit den analogen Pulsoren 21 und dem PID-Regler 22 ist zur Beschleunigung und/oder Rückführung des Schlittens 7 ein auf den Motorregler 23 einwirkender, digitaler Steuerkreis mit inkrementalem Drehgeber 25 und Processcontroler 26 vorgesehen (Fig. 3).

Der Montageablauf dieser Vorrichtung ist der folgende:

Ein Werkstückträger 4 mit zu bestückendem Werkstück wird mittels der Transporteinrichtung 1 in den Bereich der Montagestation 5 befördert. Ein in der Zeichnung nicht dargestelltes Ablesegerät an der Montagestation 5 liest eine ebenfalls nicht dargestellte Codierung am Werkstückträger 4, wodurch der Montageprozeß gestartet wird.

Durch den Vorschub des Werkstückträgers 4 gelangt dieser in den Bereich eines analogen Pulsors 21, so daß aufgrund des vorderen Markierungselementes 24 am Werkstückträger 4 eine Veränderung des vom Pulsoren 21 erzeugten Magnetfeldes eintritt, wodurch von der elektronischen Meß- und Regeleinrichtung 20 der Beschleunigungsvorgang des Schlittens 7 der Montagestation 5 eingeleitet wird. Dabei wird der Schlitten 7 definiert durch einen im Processcontroler 26 gespeicherten Beschleunigungsverlauf beschleunigt, wobei die Geschwindigkeit des Schlittens 7 größer als die des Werkstückträgers 4 ist. Die Wegerfassung des Schlittens 7 erfolgt ständig über den inkrementalen Drehgeber 25 am Antriebsmotor 18, der bevorzugt als Gleichstrommotor ausgebildet ist.

Nach einer gewissen Zeit erreicht der Schlitten 7 den Werkstückträger 4. Der analoge Pulsor 21 identifiziert wiederum die vordere Kante des vorderen Markierungselementes 24 am Werkstückträger 4, wodurch der zweite Pulsor 21 zugeschaltet wird und die Hinterkante des vorderen Markierungselementes 24 identifiziert. Durch diese Identifikation wird der analoge Steuerungskreis gestartet.

Abhängig von der sich andauernd verändernden Position, die das Markierungselement 24 und die analogen Pulsoren 21 zueinander einnehmen, verändert sich aufgrund der Änderung des jeweiligen Magnetfeldes jeweils die Spannung an den Pulsoren. Die Größe und Geschwindigkeit der Spannungsänderung wird als Eingangs- bzw. Steuersignal zuerst in den PID-Regler 22 gegeben und in diesem umgesetzt und an den Motorregler 23 weitergegeben. Vom Motorregler 23 wird die Drehzahl des Antriebsmotors 18 ständig derart beeinflußt, daß eine Synchronisation von Schlitten 7 und Werkstückträger 4 erfolgt. Diese Synchronisation ist besonders genau, da aufgrund der beiden voneinander unabhängigen Pulsoren 21 und der jeweils zugeordneten Meßkante des Markierungselementes 24 mögliche Ungenauigkeiten mittels des Processcontrolers 26 gegeneinander ausgeglichen werden.

Während dieser synchronisierten Bewegung von Werkstückträger 4 und Schlitten 7 findet der eigentliche Montagevorgang am Werkstück mittels der Montageeinrichtungen 6 statt. Nach Abschluß des Montagevorganges wird der analoge Steuerkreis vom Processcontroler 26 unterbrochen und die Steuerung erfolgt wiederum über den digitalen Steuerkreis. Der Schlitten 7 wird anschließend definiert über den Drehgeber 25 am Antriebsmotor 18 in entgegengesetzter Richtung zur Vorschubrichtung in seine Ausgangsstellung zurückbewegt. Die Beschleunigung und die Rückführung des Schlit tens 7 erfolgt somit mittels des digitalen Steuerkreises, während die eigentliche Synchronisierung vom Analogsteuerkreis gesteuert wird.

Die Montagestation ist anschließend wiederum betriebsbereit und kann beispielsweise nach Wechsel der Montageeinrichtungen das nächste Werkstück nach synchronisierter Positionierung des Schlittens 7 am nächsten Werkstückträger 4 bestücken.

Die Synchronisation von Schlitten 7 und Werkstückträger 4 ist auch derart möglich, daß beim Vorbeifahren des Werkstückträgers 4 am Schlitten 7 die Synchronisation sofort über die beiden analogen Pulsoren 21 erfolgt, die die Vorder- und Hinterkante des Markierungselementes 24 identifizieren.

Wie in der Zeichnung dargestellt, können an jedem Werkstückträger 4 mehrere Markierungselemente seitlich angeordnet sein, die eine Synchronisation in drei unterschiedlichen Ebenen ermöglichen, so daß gleichzeitig mittels der Synchronisationseinrichtung eine Positionierung der Montageeinrichtung gegenüber dem Werkstück in Transportrichtung möglich ist.

Natürlich ist die Erfindung nicht auf die in der Zeichnung dargestellten Ausführungsbeispiele beschränkt. Weitere Ausgestaltungen der Erfindung sind möglich, ohne den Grundgedanken zu verlassen.

## Patentansprüche

1. Vorrichtung zur Montage von Werkstücken mit an einer Transporteinrichtung (1) angeordneten Werkstückträgern (4) und mit entlang der Transporteinrichtung (1) angeordneten Montagestation (5) mit Montageeinrichtungen (6), wobei jede Montagestation (5) mit einem Antrieb (18) für die jeweilige Montageeinrichtung (6) ausgerüstet ist und eine Einrichtung zur zeitweisen Synchronisation einer Mitnahmebewegung der Montageeinrichtung (6) jeder Montagestation (5) mit dem jeweiligen Werkstückträger (4) aufweist,
dadurch gekennzeichnet,
daß jede Montagestation (5) mit einer zugeordneten elektronischen meß- und Regeleinrichtung (20) zur Positionsbestimmung des jeweiligen Werkstückträgers (4) und zur Synchronisation der Werkstückträger- und Montageeinrichtungsvorschubgeschwindigkeit ausgerüstet ist, wobei die Meß- und Regeleinrichtung (20) Mittel (21) zur kontinuierlichen Positionsbestimmung des Werkstückträgers (4) und Mittel (22,23) zur entsprechenden Anpassung der Vorschubgeschwindigkeit des Antriebsmotors (18) aufweist.

2. Vorrichtung nach Anspruch 1,
dadurch gekennzeichnet,
daß die Montageeinrichtung (6) auf einem in Richtung der Transporteinrichtung (1) in einer Schlittenführung (8) der Montagestation (5) verfahrbaren Schlitten (7) angeordnet ist.

3. Vorrichtung nach Anspruch 1 oder 2,
dadurch gekennzeichnet,
daß die Mittel zur kontinuierlichen Positionsbestimmung des Werkstückträgers (4) von wenigstens zwei am Schlitten (7) angeordneten, auf den jeweiligen Werkstückträger gerichteten, ein Magnetfeld erzeugenden analogen Pulsoren (21) und die Mittel zur Anpassung der Vorschubgeschwindigkeit des Antriebsmotors (18) von einem analogen Regler (22) und einem den Antriebsmotor (18) steuernden Motorregler (23) gebildet sind und daß jeder Werkstückträger (4) an der jeweiligen Montagestation (5) zugewandten Seite mit wenigstens einem das von den analogen Pulsoren (21) erzeugte Magnetfeld verändernden Markierungselement (24) ausgerüstet ist.

4. Vorrichtung nach Anspruch 3,
dadurch gekennzeichnet,
daß das Markierungselement (24) als Meßleiste mit wenigstens randseitigen, das von den analogen Pulsoren (21) erzeugte Magnetfeld verändernden Markierungen ausgebildet ist.

5. Vorrichtung nach Anspruch 3 oder 4,
dadurch gekennzeichnet,
daß am Werkstückträger (4) mehrere Markierungselemente (24) angeordnet sind.

6. Vorrichtung nach Anspruch 3 oder einem der folgenden,
dadurch gekennzeichnet,
daß zur Beschleunigung und/oder Rückführung des Schlittens (7) ein auf den Motorregler (23) einwirkender digitaler Steuerkreis mit inkrementalem Drehgeber (25) und Process-controler (26) vorgesehen ist.

7. Vorrichtung nach Anspruch 1 oder einem der folgenden,
dadurch gekennzeichnet,
daß die Montageeinrichtung (6) gegenüber dem Schlitten (7) um die drei Raumachsen (Pfeile 9,10) beweglich angeordnet ist.

8. Vorrichtung nach Anspruch 1 oder einem der folgenden,
dadurch gekennzeichnet,

daß der kontinuierlichen Transporteinrichtung (1) eine Werkstückzuführung vorgeschaltet und an jeder Montagestation (5) eine Montagemittelzufuhr (15) angeordnet ist.

9. Vorrichtung nach Anspruch 1 oder einem der folgenden,
dadurch gekennzeichnet,
daß die Werkstückträger (4) mit einer Codierung und die Montagestationen (5) mit einem entsprechenden Ablesegerät versehen sind.

## Claims

1. Device for assembling workpieces with workpiece carriers (4) mounted on a conveying device (1) and with assembly stations (5) with assembly devices (6) located along the conveying device (1), wherein each assembly station (5) is equipped with a drive (18) for the respective assembly device (6) and has a device for intermittently synchronising a driving motion of the assembly device (6) of each assembly station (5) with the respective workpiece carrier (4),
characterised in that
each assembly station (5) is equipped with an associated electronic measuring and control device (20) for determining the position of the respective workpiece carrier (4) and for synchronising the rate of feed of the workpiece carrier and the assembly device, wherein the measuring and control device (20) has means (21) for continuously determining the position of the workpiece carrier (4) and means (22, 23) for the corresponding matching of the rate of feed of the drive motor (18).

2. Device according to claim 1,
characterised in that
the assembly device (6) is mounted on a carriage (7) drivable in the direction of the conveying device (1) in a carriage guide (8) of the assembly station (5).

3. Device according to claim 1 or 2,
characterised in that
the means for continuously determining the position of the workpiece carrier (4) are formed by at least two analog puisers (21) generating a magnetic field, mounted on the carriage (7) and oriented towards the respective workpiece carrier, and the means for matching the feed rate of the drive motor (18) are formed of an analog control unit (22) and a motor control unit (23) controlling the drive motor (18), and in that each workpiece carrier (4) is equipped on the side facing the respective assembly station (5) with at least one marking element (24) which varies the magnetic field generated by the analog pulsers (21).

4. Device according to claim 3, characterised in that the marking element (24) is formed as a measuring strip with at least markings on the edge, for varying the magnetic field generated by the analog puisers (21).

5. Device according to claim 3 or 4, characterised in that a plurality of marking elements (24) are mounted on the workpiece carrier (4).

6. Device according to claim 3 or one of the following,
characterised in that
in order to accelerate and/or return the carriage (7), a digital control circuit, which acts on the motor control unit (23), with an incremental shaft encoder (25) and process controller (26) is provided.

7. Device according to claim 1 or one of the following,
characterised in that
the assembly device (6) is mounted so as to move in the three spatial planes (arrows 9, 10) relative to the carriage (7).

8. Device according to claim 1 or one of the following,
characterised in that
a workpiece guide is connected upstream of the continuous conveying device (1) and an assembly means supply (15) is located at each assembly station (5).

9. Device according to claim 1 or one of the following,
characterised in that
the workpiece carrier (4) is provided with a coding and the assembly stations (5) are provided with a corresponding scanner.

## Revendications

1. Dispositif pour le montage de pièces d'usinage comprenant des porte-pièces (4) disposés sur un dispositif transporteur (1) et des postes de montage (5) comprenant des dispositifs de montage (6) disposés le long du dispositif transporteur (1), chaque poste de montage (5) étant équipé d'un mécanisme d'entraînement (18) pour le dispositif de montage (6) respectif et comprenant un dispositif pour la synchronisation dans le temps du mouvement d'entraînement du dispositif de montage (6) de chaque porte-pièce (5) avec le porte-pièce respectif,
caractérisé en ce que
chaque poste de montage (5) est équipé d'un dispositif de mesure et de régulation électronique associé (2à) pour la détermination de la position du porte-pièce (4) respectif et pour la synchronisation de la vitesse d'avance du porte-pièce et du dispositif de montage, le dispositif de mesure et de régulation électronique (20) comprenant des moyens pour la détermination continue de la position du porte-pièce (4) et des moyens (22, 23) pour l'adaptation correspondante de la vitesse d'avance du moteur d'entraînement (19).

2. Dispositif selon la revendication 1,
caractérisé en ce que
le dispositif de montage (6) est monté sur un chariot (7) pouvant se déplacer en direction du dispositif transporteur (1) dans un dispositif de guidage de chariot (8) du poste de montage (5).

3. Dispositif selon la revendication 1 ou 2,
caractérisé en ce que
le moyen pour la détermination continue de la position du porte-pièce (4) est constitué par au moins deux générateurs d'impulsions analogiques (21) montés sur le chariot (7), dirigés vers le porte-pièce respectif et créant un champ magnétique, et le moyen pour adapter la vitesse d'avance du moteur d'entraînement (18) est constitué par un régulateur analogique (22) et un régulateur (23) commandant le moteur d'entraînement (18), et en ce que chaque porte-pièce (4) est équipé sur son côté qui est tourné vers le poste de montage respectif (5) d'au moins un élément de marquage (24) modifiant le champ magnétique créé par les générateurs d'impulsions analogiques (21).

4. Dispositif selon la revendication 3,
caractérisé en ce que
l'élément de marquage (24) est constitué sous forme d'une baguette de mesure comportant au moins sur son bord des marques qui modifient le champ magnétique créé par les générateurs d'impulsions analogiques (21).

5. Dispositif selon la revendication 3 ou 4,
caractérisé en ce que
plusieurs éléments de marquage (24) sont prévus sur le porte-pièce (4).

6. Dispositif selon la revendication 3 ou l'une des suivantes,
caractérisé en ce que
il est prévu pour l'accélération et/ou le retour du chariot (1) un circuit de commande numérique comprenant un encodeur incrémental (25) et un contrôleur de procédé (26) qui agissent sur le régulateur (23) du moteur.

7. Dispositif selon la revendication 1 ou l'une des suivantes,
caractérisé en ce que
le dispositif de montage (6) est monté de façon mobile par rapport au chariot (7) autour des trois axes dans l'espace (flèches 9, 10).

8. Dispositif selon la revendication 1 ou l'une des suivantes,
caractérisé en ce que
un dispositif d'amenée de pièces est monté en amont du dispositif transporteur continu (1) et une alimentation de moyens de montage (15) est prévue dans chaque poste de montage (5).

9. Dispositif selon la revendication 1 ou l'une des suivantes,
caractérisé en ce que
les porte-pièces (4) sont munis d'un codage et les postes de montage (5) d'un dispositif de lecture correspondant.

EP 0 348 604 B1

8

Fig. 1

Fig. 2

Fig. 3